(19)

Europäisches Patentamt

European Patent Office

Office européen des brevets

(11) **EP 4 600 697 A1**

(12) **EUROPEAN PATENT APPLICATION**
published in accordance with Art. 153(4) EPC

(43) Date of publication:
**13.08.2025 Bulletin 2025/33**

(21) Application number: **23874512.9**

(22) Date of filing: **01.08.2023**

(51) International Patent Classification (IPC):
**G01S 13/74** (2006.01)   **G01S 17/86** (2020.01)
**G01S 17/931** (2020.01)

(52) Cooperative Patent Classification (CPC):
**G01S 13/74; G01S 17/86; G01S 17/931**

(86) International application number:
**PCT/JP2023/028080**

(87) International publication number:
**WO 2024/075379 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.10.2022 JP 2022159547**

(71) Applicants:
• **Fives Intralogistics K.K.
Kobe-shi, Hyogo 650-0047 (JP)**

• **Fives Intralogistics S.p.A.
21015 Lonate Pozzolo (VA) (IT)**

(72) Inventors:
• **OHTA, Masaya
Kobe-shi, Hyogo 650-0047 (JP)**
• **FUKUKITA, Suguru
Kobe-shi, Hyogo 650-0047 (JP)**

(74) Representative: **Fives IP
3, rue Drouot
75009 Paris (FR)**

(54) **AUTOMATED GUIDED VEHICLE TRAVELING SYSTEM**

(57)     The present invention aims to provide an automated guided vehicle (AGV) traveling system capable of accurately grasping the position and the azimuth angle of the AGV by a simple method unaffected by the use environment. The provide AGV traveling system comprises: an AGV; and a travel path along which the AGV travels, wherein the travel path is partitioned by a shelf or a wall; an RFID tag is placed on the shelve or the wall; and the AGV includes: a vehicle body, a drive unit, a control unit that controls the drive unit, a surroundings detection unit that detects an object around the AGV, and an RFID reader having an antenna that reads information on positions from the RFID tag, wherein while the AGV is traveling along the travel path, a detection result of the surroundings detection unit is used to estimate the position and the azimuth angle of the AGV by a SLAM technology, wherein the information on positions are read from the RFID tag of the shelf or wall, wherein based on this information on positions, the position and the azimuth angle of the AVG are estimated, and wherein the position and the azimuth angle of the AVG estimated by the SLAM technologies are corrected by the position and the azimuth angle of the AGV estimated based on the position of the RFID tag.

[FIG. 6]

Description

## TECHNICAL FIELD

The present invention relates to an automated guided vehicle (AGV) traveling system allowing an AGV to accurately grasp its own position by a simple method that does not rely on the environment in which the system is used. More specifically, it relates to an AGV traveling system configured to correct, based on information on the position of an RFID tag, a deviation of its own position estimated by a SLAM technique.

## BACKGROUND ART

In a factory, a sorting facility for goods, a warehouse, or the like places, an automated guided vehicle (AGV) that can automatically travel along a target travel path and load/unload goods has been used in order to accurately transport goods without depending on human hands.

Some of the generally used methods for guiding the AGV along the travel path include: detection of radio waves from a guide cable embedded in the floor of the travel path; detection of magnetism or reflected light of a guide tape attached to the floor or the ceiling of the travel path, or recognition, by a camera or the like, of images of guide signs installed on the travel path.

However, the method including the embedding in the floor of the travel path has problems such as the high installation cost and the incapability of changing easily the travel path. The method including the attaching to the floor or the ceiling of the travel path has its own problem such as the incapable of detecting information from the guide tape due to environmental factors of, e.g., a damaged guide tape and a dirty floor. Particularly, a use environment where a forklift or a person intervenes is susceptible to the deteriorated guide tapes, which may probably lead to more frequent replacement of the guide tapes. Furthermore, the method including image recognition of a guide sign on the travel path has a problem of interruption of the image recognition in an environment with entering ambient light and/or changing illuminance, or in an environment with traffic of a forklift, a person, or the like.

A method adopted to address the problem uses LiDAR technology to detect obstacles in the surroundings, allowing AGVs to travel in a trackless manner based on the detection results. According to this method, the AGV relies on a simultaneous localization and mapping (SLAM) technology to estimate its own position and to create an environment map simultaneously.

However, use of the SLAM technology alone may result in erroneous recognition of the position or failed detection of the position when an environmental map is created and then the created environmental map is collated with a current environment. This is because of a changing environment over time or a person/persons intervening the scene. Such problems leave a demand for an AGV traveling system relying on a method unaffected by an environment to correct information on its own position.

## CITATION LIST

### PATENT LITERATURE

Patent Literature 1: JP2022-93887(A)
Patent Literature 2: JP2020-205044(A)
Patent Literature 3: JP2021-119440(A)
Patent Literature 4: WO2021/111613(A1)
Patent Literature 5: WO2020/137315(A1)
Patent Literature 6: WO2013/045298(A1)
Patent Literature 7: JP2021-107994(A)
Patent Literature 8: JP2016-115207(A)
Patent Literature 9: JP2021-101156(A)

## SUMMARY OF INVENTION

### TECHNICAL PROBLEM

The present invention has been made to solve the above-described problems of the prior art, and an object of the present invention is to provide an automated guided vehicle (AGV) traveling system capable of accurately grasping the vehicle's position and the azimuth angle of the AGV by a simple method unaffected by the use environment.

## SOLUTION TO PROBLEM

As a result of intensive studies to achieve the above-described object, the present inventors have discovered that an AGV is made capable of always estimating its own position accurately by: using shelves and/or walls to divide a travel path of the AGV; disposing RFID tags on the shelves and/or walls; making the AGV travel along the travel path with the shelves and/or walls on the left and right sides and read the information on the positions of the RFID tags present on the left and right sides of the travel path; estimating highly accurately the information on the position of the AGV from the information on the position thus acquired; and based on the estimated information on the position of the AGV, appropriately correcting a deviation of the vehicle's position and/or azimuth angle that has been estimated by the SLAM technology. With the discovery, the present inventors have completed the present invention.

The present invention, which has been completed based on the above findings, has the following configurations (1) to (8).

(1) An automated guided vehicle (AGV) traveling system comprising: an AGV; and a travel path along which the AGV travels, wherein the travel path is partitioned by a shelf and/or a wall; an RFID tag is placed on the shelve and/or the wall; and the AGV includes: a vehicle body, a drive unit that causes the vehicle body to travel, a control unit that controls the drive unit, a surroundings detection unit that detects an object around the AGV, and an RFID reader having an RFID antenna that reads information on positions from the RFID tag, wherein while the AGV is traveling along the travel path, a detection result of the surroundings detection unit is used to estimate the position and the azimuth angle of the AGV by an SLAM technology, wherein the information on positions are read from the RFID tag of the shelf and/or wall that partitions the travel path, wherein based on this information on positions, the position and the azimuth angle of the AVG are estimated, and wherein the position and the azimuth angle of the AVG estimated by the SLAM technologies are corrected by the position and the azimuth angle of the AGV estimated based on the position of the RFID tag.

(2) The AGV traveling system according to (1), wherein the detection by the surroundings detection unit is relies on a LiDAR technology.

(3) The AGV traveling system according to (1), wherein shelves and/or walls on which RFID tags are placed are present on both sides along the travel path.

(4) The AGV traveling system according to (3), wherein the travel path is partitioned by the shelves, wherein each of the shelves are provided with a plurality of shelf boards located at a plurality of heights, and wherein the RFID tag is provided on one of the shelf boards corresponding to the height that can be read by the RFID antenna.

(5) The AGV traveling system according to (3), wherein the RFID antennas are provided on both sides of the vehicle body of the AGV.

(6) The AGV traveling system according to (5), wherein the RFID antenna has directivity only in a certain area on a side from the vehicle body and is configured to have a limited reading distance.

(7) The AGV traveling system according to (5) or (6), wherein the AGV is configured to read, while traveling on the travel path, information on positions of RFID tags present on the left and right shelves and/or walls along the travel path by RFID antennas provided on both sides of a vehicle body, to estimate a position and an azimuth angle of the AGV based on the information on positions, and to cause the position and the azimuth angle estimated as above to correct the position and the azimuth angle of the AGV estimated by the SLAM technology.

(8) The AGV traveling system according to any one of (1) to (6), wherein the AGV traveling system is provided indoors.

## ADVANTAGEOUS EFFECTS OF INVENTION

The automated guided vehicle (AGV) traveling system of the present invention obtains highly accurate information on positions from RFID tags provided on the shelves and/or walls on both sides of the travel path, not on the floor or ceiling thereof. Hence, the AGV traveling system can estimate accurate information on the position and the azimuth angle of the AGV without relying on environmental factors that may include contamination of the guidance means and illuminance change. In addition, based on the information on positions thus obtained, the AGV traveling system can appropriately correct the deviation of the position and the azimuth angle of the AGV having been estimated by the SLAM technology. In addition, some indoor position measuring technologies such BLE or beacon can estimate the position of the automatic guided vehicle but has difficulty in calculating the azimuth angle to which the automatic guided vehicle is directed. In contrast, the automatic guided vehicle traveling system of the present invention can always provide accurate information not only on the position of the automatic guided vehicle but also on the azimuth angle thereof.

## BRIEF DESCRIPTION OF DRAWINGS

FIG. 1 is a schematic plan view illustrating an example automated guided vehicle (AGV) traveling system according to the present invention.

FIGS. 2A and 2B are schematic views illustrating an example shelf that partitions the travel path of AGVs in the AGV travel system of the present invention.

**FIG.** 3 is a schematic view illustrating example RFID tags placed on a shelf in the AGV traveling system of the present invention.

FIG. 4 is a schematic view illustrating an example AGV according to the present invention.

FIG. 5 schematically illustrates an example configuration of the AGV for reading an RFID tag according to the present invention.

FIG. 6 schematically illustrates an example state in which the AGV reads information on the position from an RFID tag placed on a shelf according to the present invention.

FIG. 7 is an explanatory diagram of a procedure of processing the registration of data contained in an RFID tag in the AGV traveling system according to the present invention.

FIG. 8 is an explanatory diagram of a procedure of processing the estimation of the position of an RFID tag in the AGV traveling system according to the present invention.

FIGS. 9A and 9B illustrate a procedure of processing the determination, by the AGV traveling system, of the vehicle position and the azimuth angle of the AGV based on the RFID tags placed on the left and the right sides according to the present invention.

FIG. 10 is a diagram for explaining the procedure of processing the estimation of the position of an AGV in the AGV traveling system according to the present invention.

FIGS. 11A, 11B, and 11C illustrate a procedure of processing the determination, by the AGV traveling system, of the vehicle position and the azimuth angle of the AGV based on RFID tags placed on the left and the right sides according to the present invention.

## DESCRIPTION OF EMBODIMENTS

An embodiment of an automated guided vehicle (AGV) traveling system according to the present invention will be described below with reference to the drawings, but the present invention is not limited thereto.

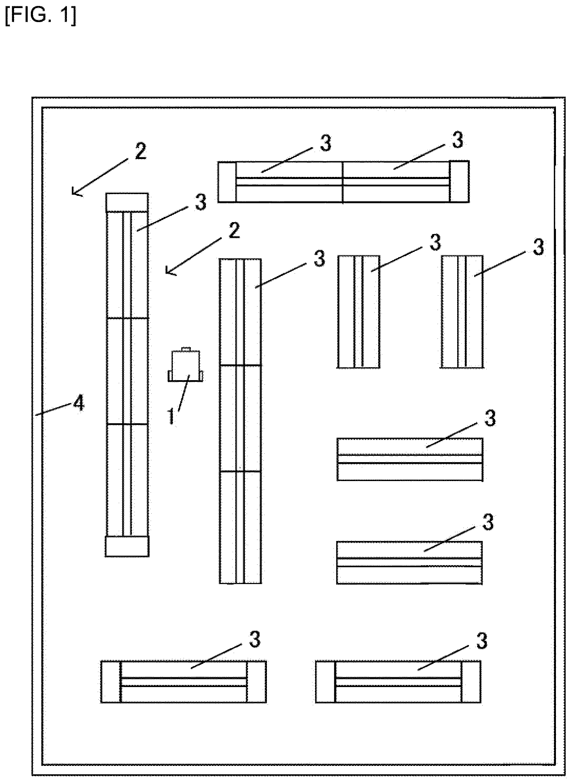

FIG. 1 is a schematic plan view as viewed from above illustrating an AGV traveling system according to the present invention. FIG. 1 shows an AGV1, and a travel path 2 along which the AGV1 travels. The travel path 2 is partitioned on the left and right sides thereof by the shelves 3 and/or the walls 4.

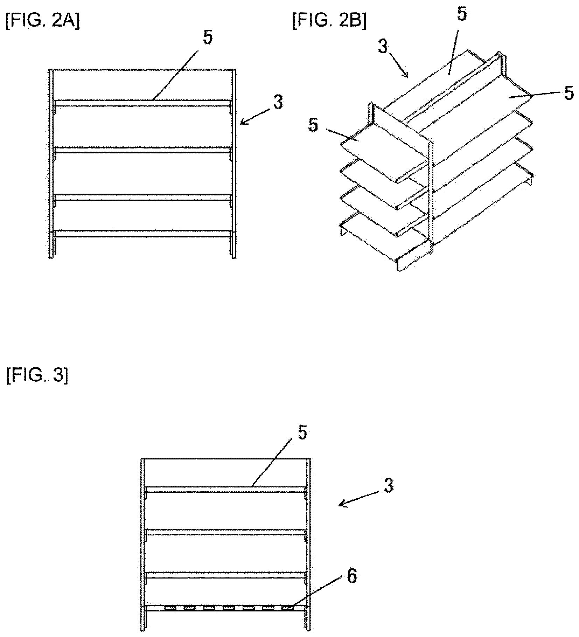

FIG. 2 schematically illustrates an example of the shelf 3 that partitions the travel path 2, FIG. 2A is a schematic view of the shelf 3, as viewed from the front thereof, in which four shelf boards 5 are arranged, and FIG. 2B is a schematic view of the shelf 3, as viewed obliquely from above, in which a plurality of shelf boards 5 are arranged in three directions. When the shelf 3 is provided with the shelf board 5, the number, the width, the height, and the thickness of the shelf board 5 are not particularly limited, and a drawer or a partition can be provided as appropriate in addition to the shelf board 5. The shelf 3 can also be made by connecting various types of shelves as illustrated in FIG. 1. However, in the creation of the shelf 3, it is preferable to arrange each RFID tag so that the place where the RFID tag is installed is oriented to the travel path 2 of the AGV1. Although not particularly illustrated except for in FIG. 1, the wall 4 may be, for example, a partition plate, a partition wall, a structural wall, a structural column, or the like, and RFID tags may be disposed on these walls as in the case of the shelf 3.

FIG. 3 schematically illustrates an example in which RFID tags are placed on the shelf of FIG. 2A. In FIG. 3, a plurality of RFID tags 6 (seven RFID tags 6 in FIG. 3) are placed on the shelf board 5 at a height of 100 mm from the floor where the shelf 3 is installed. The RFID tag 6 can be placed at any position of the shelf 3 as long as the radio wave of the RFID antenna of the AGV passing by the side of the RFID tag 6 reaches the RFID tag 6. The RFID tag 6 may be attached directly to the shelf, or a part of the RFID tag 6 may be embedded in the shelf. When the shelf 3 is made of metal disabling the reading of information held by the RFID tag 6, it is preferable to use the RFID tag 6 suitable for the use in metals or to process the RFID tag 6 so as not to be affected by metals, thus allowing information of the RFID tag 6 to be read.

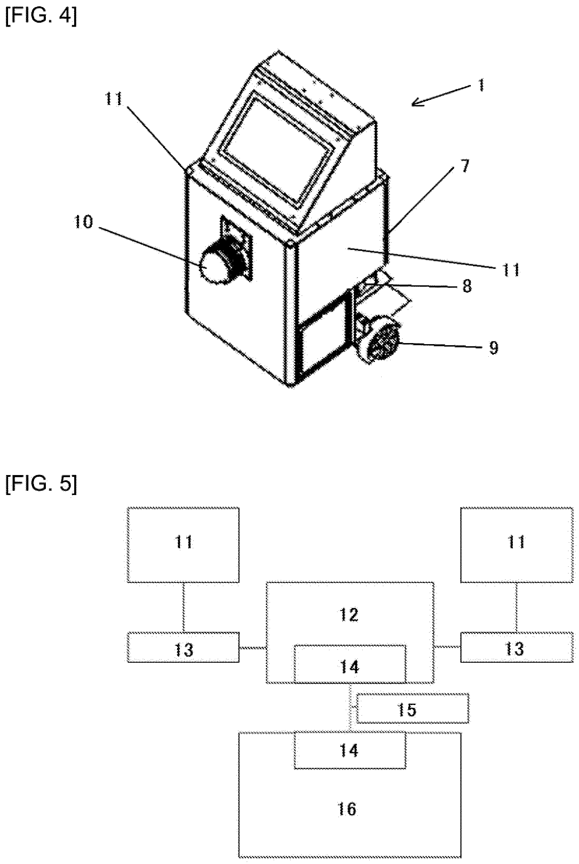

FIG. 4 schematically illustrates an example AGV used in the AGV traveling system according to the present invention. As illustrated in FIG. 4, the AGV1 includes a vehicle body 7, a drive unit 8 that causes the vehicle body 7 to travel by an electric motor or the like and traveling wheels 9, a control unit (not illustrated in FIG. 4) that controls the drive unit 8, a surroundings detection unit 10 that detects an object located around the AGV, and an RFID antenna 11 and an RFID reader (not illustrated) that are used to read information on positions from RFID tags 6.

The control unit is configured not only to control the drive unit 8 but also, to use the SLAM technology for the purposes of creating a surrounding environment map and estimating information on positions and the azimuth angles of the AGV based on the surroundings detection results obtained from the surroundings detection unit 10 while the vehicle body 7 is traveling. In addition, the control unit is configured to correct, based on the information of the vehicle position and the azimuth angle estimated from the information on positions of the RFID tags 6 present on the left and right sides of the travel path 2, the deviation of the information on positions having been obtained by the SLAM technology and accumulated with the distance traveled by the AGV.

The surroundings detection unit 10 is not particularly limited as long as it can detect the objects or obstacles in the surroundings, and a conventionally-known LiDAR, camera, or the like technologies can be adopted as the surroundings detection units 10. The surroundings detection unit 10 is preferably configured to be able to perform detection by the LiDAR technology in view of detection accuracy. The surroundings detection unit 10 is preferably provided at a head portion of the vehicle body of the AGV1. The detection result of the surroundings detection unit 10 is used for creating a surrounding environment map and estimating the position and the azimuth angle of the AGV by the SLAM technology.

FIG. 5 schematically illustrates a configuration of an AGV for reading an RFID tag according to the present invention. FIG. 5 illustrates an RFID antenna 11 that receives and transmits radio waves for reading an RFID tag. The RFID antenna 11 is preferably provided on the left side and on the right of the vehicle body of the AGV as illustrated in FIG. 4 enabling the reading of the RFID tags located on the left side and on the right side along the travel path 2. An RFID reader 12 is a reader for reading the information held by the RFID tag and received by the RFID antenna 11. Each RFID tag has a serial No. storing information on its own position. The RFID reader 12 reads the serial numbers of the RFID tags. The RFID antenna 11 and the RFID reader 12 are connected by a coaxial cable 13, which is used to transmit and receive radio waves therebetween. A control unit 16 uses a communication port 14 and a communication cable 15 to exchange data between the RFID reader 12 and the control unit 16. Based on the data obtained from the RFID reader 12, the control unit 16 estimates the vehicle position and the azimuth angle of the AGV.

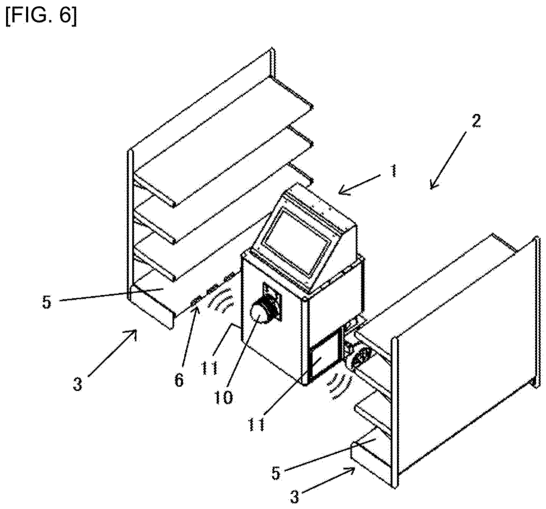

FIG. 6 schematically illustrates a state in which the AGV 1 reads the information on positions from the RFID tags 6 placed on the shelf boards 5 of the shelves 3 on both sides along the travel path 2 according the present invention. As illustrated in FIG. 6, based on the information on the surroundings detected by the surroundings detection unit 10, the AGV1 creates an environmental map around the AGV1 and estimates the position and the azimuth angle of the AGV by the SLAM technology while traveling along the travel path 2. The RFID reader **12 having the** RFID antenna 11, in turn, reads the information on positions from the RFID tags 6 placed on the shelf boards 5 of the shelves 3 on the left side and right side along the travel path 2. Based on the information on positions thus obtained, the position and the azimuth angle of the AGV1 are estimated. The information on positions estimated by the former technique, i.e., the SLAM technique is replaced with and updated by the information on positions estimated by the latter technique, i.e., the technique using the RFID tag 6 because an difference (i.e., error) of the estimated position from the actual position in the former information increases as the vehicle continues traveling. Thus, accurate information on positions of the AGV can always be acquired.

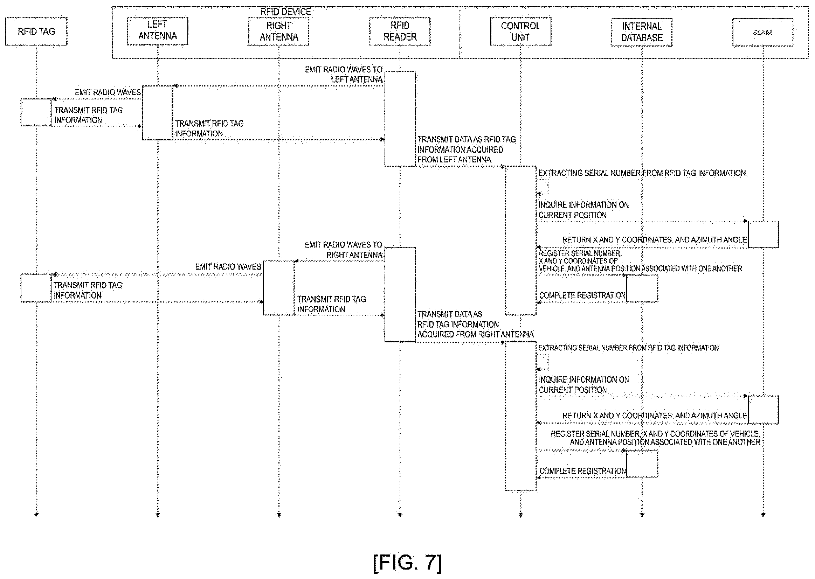

FIG. 7 is an explanatory diagram describing a procedure of processing the registration of data contained in an RFID tag in the AGV traveling system according to the present invention. As can be seen from FIG. 7, based on an instruction from the RFID reader of the AGV, the left RFID antenna and the right RFID antenna emit radio waves toward the corresponding shelves and/or walls on the corresponding sides. Then, information is transmitted from the RFID tags present on the left side and right side along the travel path to the RFID antennas, and the RFID antennas transmit the information on the RFID tag to the RFID reader. The RFID reader transmits the information on the RFID tags acquired from the left antenna and the right antenna to the control unit. The control unit extracts, from the information on each RFID tag, a uniquely assigned serial number. The control unit inquires the information on positions estimated by the SLAM technology in order to obtain the information on the current position of the AGV, and thus acquires the position (X, Y coordinates) and the azimuth angle (the angle at which the vehicle is facing) of the vehicle as the information on positions of the AGV. Then, the serial No. of the RFID tag is associated with the information on the position of the AGV estimated by the SLAM technology and with the position of the RFID antenna, and then the associated information thus obtained is registered in a database. Since each RFID tag is continuously read while the RFID antenna of the AGV is within a receivable distance, a plurality of pieces of information on the position of the AGV is obtained for a single RFID tag, and the accurate position and azimuth angle of the vehicle while the AGV is traveling can be known from the plurality of pieces of information on position.

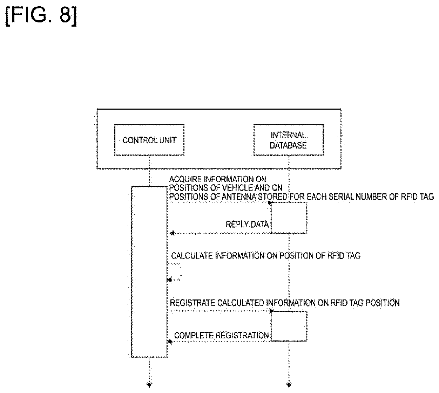

FIG. 8 is an explanatory diagram describing a procedure of processing the estimation of the position of an RFID tag in the AGV traveling system according to the present invention. In the estimation of the position of each RFID tag, the control unit acquires, from an internal database, the information on the positions of the vehicle stored individually for the serial number of each RFID, and a list of the RFID antenna positions stored individually for the serial number of each RFID. Based on the data, the information on positions of the RFID tags is calculated. The calculated information on the positions of the RFID tags is registered in the internal database.

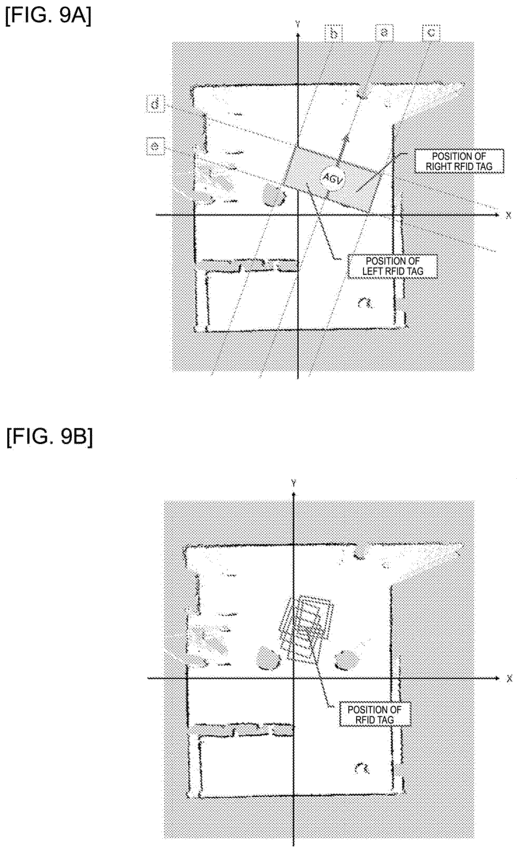

FIGS. 9 illustrates a procedure of processing the determination, by the AGV traveling system, of the position and the azimuth angle of the AGV based on the RFID tags located at positions on the left side and the right side from the AGV according to the present invention. Although each RFID antenna generally emits radio waves in all directions, the present invention can provide the RFID antennas emitting directional radio waves to cover only a certain area on the corresponding side of the vehicle body by providing a metal or the like piece to cover the RFID antenna. Further, by limiting the distance that the radio waves from each RFID antenna can reach, the readable distance can be limited only to the RFID tags adjacent to the RFID antenna. Since the reading range of the RFID tag is limited to a certain range during the traveling of the AGV, the range in which the read RFID tag exists is limited to the area enclosed by the linear lines a, b, d, and e in FIG. 9A for the left RFID tag, and is limited to the area enclosed by the linear lines a, c, d, and e in FIG. 9A for the right RFID tag.

The linear lines a, b, c, d, and e are expressed by the following equations.

$$Y = \tan\theta * X + y0 - \tan\theta * x0 \qquad a$$

$$Y = \tan\theta * X + y0 - \tan\theta * x0 + r/\sin\theta \qquad b$$

$$Y = \tan\theta * X + y0 - \tan\theta * x0 - r/\sin\theta \qquad c$$

$$Y = \tan(\theta - 90°) * X + y0 - \tan(\theta - 90°) * x0 + (w/\sin\theta) \quad d$$

$$Y = \tan(\theta - 90°) * X + y0 - \tan(\theta - 90°) * x0 - (w/\sin\theta) \qquad e$$

$\theta$: Azimuth angle of AGV
x0: Position X of the vehicle
y0: Position Y of the vehicle
r: Reachable distance of RFID radio waves
w: RFID radio wave width

The area in which the RFID tag is present, which can be obtained as described above, is predicted at a plurality of locations, and the predictions of the positions of the RFID tags are superimposed as illustrated in FIG. 9B, whereby the accurate position of each RFID tag can be estimated.

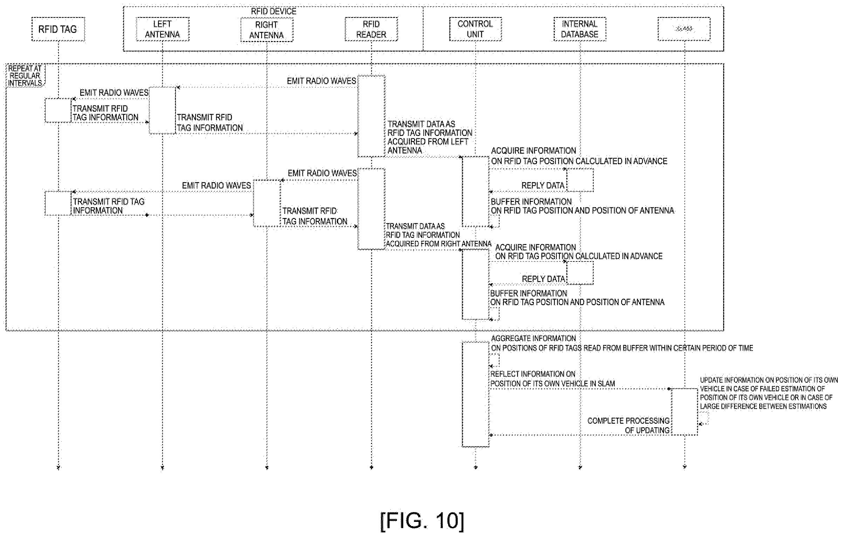

FIG. 10 is a diagram for explaining a procedure for processing the estimation of the position of the AGV in the AGV traveling system according to the present invention. In FIG. 10, the portions of the drawing where the information on the RFID tag is acquired by the RFID device of the AGV and where the RFID reader transmits, as data, the information on the RFID tag to the control unit is the same as that in FIG. 7. The control unit acquires, from the internal database, the information on the position of the RFID tag calculated in advance and buffers the information on position of the RFID tag and the antenna position. The above-described operation is repeated at regular time intervals. Thereafter, the control unit aggregates the pieces of information on positions of the RFID tags read from the buffer within a certain period of time and based on the information on the aggregated information, calculates the position of its own vehicle. The information on the position of its own vehicle is then reflected in the information on positions estimated by the SLAM technology. Specifically, when the information on positions estimated by the SLAM technology is not appropriately obtained or when there is a difference from the information on positions obtained based on the RFID tags, the information on positions of the AGV estimated by the SLAM technology is replaced with and updated by the information on positions obtained from the RFID tags. Alternatively, as soon as the information on positions is obtained from any RFID tag, the corresponding information on positions is replaced with and updated by the newly obtained information on positions.

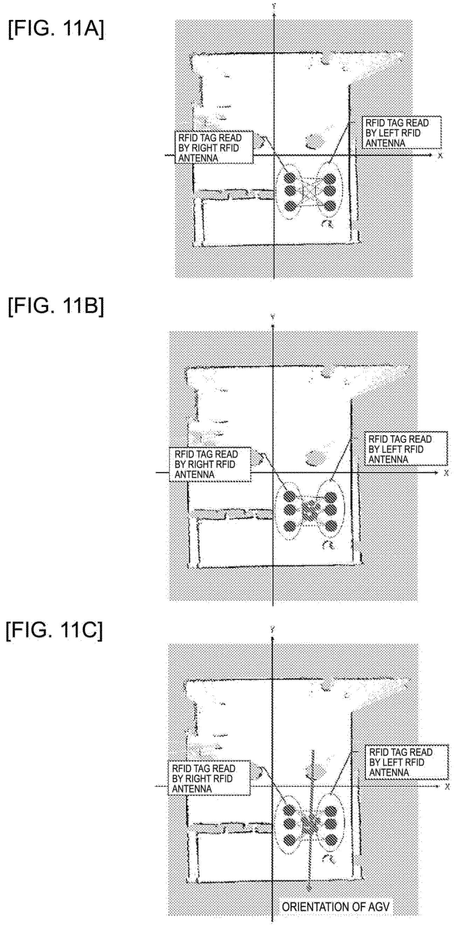

FIG. 11 illustrates a procedure of processing the determination of the position and the azimuth angle of the AGV by the RFID tags located on the left side and right side from the AGV in the AGV traveling system according to the present invention. First, the AGV uses the RFID antennas to read the left-side RFID tag and right-side RFID tags. When the pieces of information of the RFID tags read by the RFID antennas on the left side and the right side of the AGV are detected, the piece of information on positions read by the RFID antenna on the left side and the piece of information on positions read by the RFID on the right side are used to create a primary straight line between the positions, as illustrated in FIG. 11A. Then, as illustrated in FIG. 11B, the intersection points of the created linear lines are obtained, and the position of the AGV is calculated from the average point of the intersection points. Further, as illustrated in FIG. 11C, the azimuth angle of the AGV (the direction in which the AGV is facing) is calculated by calculating regression lines of the intersection points. The position and the azimuth angle of the AGV calculated by the above-described method are extremely accurate, and new pieces of information on RFID tags can be obtained at any time while the AGV is traveling. Hence, accurate information on positions of the automatic guided vehicle can be acquired. By allowing the information on positions estimated by the SLAM technology to be replaced with and updated by the information on positions described above, accurate information on positions of the AGV is always obtained.

Although a typical example of the AGV traveling system of the present invention has been described above, addition, change, and deletion of conventionally-known techniques can be made without departing from the technical idea of the present invention, i.e., the technical idea that the information on positions of the AGV is estimated from the information on the RFID tags existing on both sides along the travel path and that the information on positions thus estimated as above is used to correct the information on positions of the AGV estimated by the SLAM technique.For example, the method of estimating the information on positions of the AGV by use of the RFID tags, the method of estimating the information on positions of the AGV by the SLAM technology, and the processing procedures and processing configurations associated with the methods are not limited to the methods and procedures, or configurations described above. The configuration of the AGV, the travel path, and the shelves and/or walls on the left and right sides along the travel paths are not limited to the above ones. Needless to say, the invention be limited only by the scope of the appended claims.

## INDUSTRIAL APPLICABILITY

According to the present invention, it is possible to provide an AGV traveling system capable of accurately grasping information on the positions of its own AGV, i.e., information on the positions and/or the azimuth angles associated with its own AGV by a simple method unaffected by the use environment. Hence,AGV traveling system according to the invention is extremely useful in the relevant industry.

## REFERENCE SIGNS LIST

1 AGV
2 Travel path
3 Shelf
4 Wall
5 Shelf board
6 RFID tag
7 Vehicle body
8 Drive unit
9 Running wheel
10 Surroundings detection unit
11 RFID antenna
12 RFID reader
13 Coaxial cable
14 Communication port
15 Communication cable
16 Control unit

## Claims

1. An automated guided vehicle (AGV) traveling system comprising: an AGV; and a travel path along which the AGV travels, wherein the travel path is partitioned by a shelf and/or a wall; an RFID tag is placed on the shelve and/or the wall; and the AGV includes: a vehicle body, a drive unit that causes the vehicle body to travel, a control unit that controls the drive unit, a surroundings detection unit that detects an object around the AGV, and an RFID reader having an RFID antenna that reads information on positions from the RFID tag, wherein while the AGV is traveling along the travel path, a detection result of the surroundings detection unit is used to estimate the position and the azimuth angle of the AGV by a SLAM technology, wherein the information on positions are read from the RFID tag of the shelf and/or wall that partitions the travel path, wherein based on this information on positions, the position and the azimuth angle of the AVG are estimated, and wherein the position and the azimuth angle of the AVG estimated by the SLAM technologies are corrected by the position and the azimuth angle of the AGV estimated based on the position of the RFID tag.

2. The AGV traveling system according to claim 1, wherein the detection by the surroundings detection unit is relies on a LiDAR technology.

3. The AGV traveling system according to claim 1, wherein shelves and/or walls on which RFID tags are placed are present on both sides along the travel path.

4. The AGV traveling system according to claim 3, wherein the travel path is partitioned by the shelves, wherein each of the shelves are provided with a plurality of shelf boards located at a plurality of heights, and wherein the RFID tag is provided on one of the shelf boards corresponding to the height that can be read by the RFID antenna.

5. The AGV traveling system according to claim 3, wherein the RFID antennas are provided on both sides of the vehicle body of the AGV.

6. The AGV traveling system according to claim 5, wherein the RFID antenna has directivity only in a certain area on a side from the vehicle body and is configured to have a limited reading distance.

7. The AGV traveling system according to claim 5 or 6, wherein the AGV is configured to read, while traveling on the travel path, information on positions of RFID tags present on the left and right shelves and/or walls along the travel path by RFID antennas provided on both sides of a vehicle body, to estimate a position and an azimuth angle of the AGV based on the information on positions, and to cause the position and the azimuth angle estimated as above to correct the position and the azimuth angle of the AGV estimated by the SLAM technology.

8. The AGV traveling system according to any one of claims 1 to 6, wherein the AGV traveling system is provided indoors.

[FIG. 1]

[FIG. 2A]

[FIG. 2B]

[FIG. 3]

[FIG. 4]

[FIG. 5]

[FIG. 6]

RFID TAG

RFID DEVICE

LEFT ANTENNA    RIGHT ANTENNA    RFID READER    CONTROL UNit    INTERNAL DATABASE    SLAM

EMIT RADIO WAVES TO LEFT ANTENNA

EMIT RADIO WAVES

TRANSMIT RFID TAG INFORMATION

TRANSMIT RFID TAG INFORMATION

TRANSMIT DATA AS RFID TAG INFORMATION ACQUIRED FROM LEFT ANTENNA

EXTRACTING SERIAL NUMBER FROM RFID TAG INFORMATION

INQUIRE INFORMATION ON CURRENT POSITION

RETURN X AND Y COORDINATES, AND AZIMUTH ANGLE

REGISTER SERIAL NUMBER, X AND Y COORDINATES OF VEHICLE, AND ANTENNA POSITION ASSOCIATED WITH ONE ANOTHER

COMPLETE REGISTRATION

EMIT RADIO WAVES TO RIGHT ANTENNA

EMIT RADIO WAVES

TRANSMIT RFID TAG INFORMATION

TRANSMIT RFID TAG INFORMATION

TRANSMIT DATA AS RFID TAG INFORMATION ACQUIRED FROM RIGHT ANTENNA

EXTRACTING SERIAL NUMBER FROM RFID TAG INFORMATION

INQUIRE INFORMATION ON CURRENT POSITION

RETURN X AND Y COORDINATES, AND AZIMUTH ANGLE

REGISTER SERIAL NUMBER, X AND Y COORDINATES OF VEHICLE, AND ANTENNA POSITION ASSOCIATED WITH ONE ANOTHER

COMPLETE REGISTRATION

[FIG. 7]

EP 4 600 697 A1

13

[FIG. 8]

[FIG. 9A]

POSITION OF
RIGHT RFID TAG

AGV

POSITION OF
LEFT RFID TAG

[FIG. 9B]

POSITION OF
RFID TAG

RFID TAG

RFID DEVICE

LEFT ANTENNA

RIGHT ANTENNA

RFID READER

CONTROL UNIT

INTERNAL DATABASE

SLAM

REPEAT AT REGULAR INTERVALS

EMIT RADIO WAVES

EMIT RADIO WAVES

TRANSMIT RFID TAG INFORMATION

TRANSMIT RFID TAG INFORMATION

TRANSMIT DATA AS RFID TAG INFORMATION ACQUIRED FROM LEFT ANTENNA

ACQUIRE INFORMATION ON RFID TAG POSITION CALCULATED IN ADVANCE

REPLY DATA

EMIT RADIO WAVES

EMIT RADIO WAVES

BUFFER INFORMATION ON RFID TAG POSITION AND POSITION OF ANTENNA

TRANSMIT RFID TAG INFORMATION

TRANSMIT RFID TAG INFORMATION

TRANSMIT DATA AS RFID TAG INFORMATION ACQUIRED FROM RIGHT ANTENNA

ACQUIRE INFORMATION ON RFID TAG POSITION CALCULATED IN ADVANCE

REPLY DATA

BUFFER INFORMATION ON RFID TAG POSITION AND POSITION OF ANTENNA

AGGREGATE INFORMATION ON POSITIONS OF RFID TAGS READ FROM BUFFER WITHIN CERTAIN PERIOD OF TIME

REFLECT INFORMATION ON POSITION OF ITS OWN VEHICLE IN SLAM

UPDATE INFORMATION ON POSITION OF ITS OWN VEHICLE IN CASE OF FAILED ESTIMATION OF POSITION OF ITS OWN VEHICLE OR IN CASE OF LARGE DIFFERENCE BETWEEN ESTIMATIONS

COMPLETE PROCESSING OF UPDATING

[FIG. 10]

[FIG. 11A]

RFID TAG READ BY RIGHT RFID ANTENNA

RFID TAG READ BY LEFT RFID ANTENNA

[FIG. 11B]

RFID TAG READ BY RIGHT RFID ANTENNA

RFID TAG READ BY LEFT RFID ANTENNA

[FIG. 11C]

RFID TAG READ BY RIGHT RFID ANTENNA

RFID TAG READ BY LEFT RFID ANTENNA

ORIENTATION OF AGV

## INTERNATIONAL SEARCH REPORT

International application No.

**PCT/JP2023/028080**

| A. | CLASSIFICATION OF SUBJECT MATTER |
|---|---|

*G05D 1/02*(2020.01)i; *G01S 13/74*(2006.01)i; *G01S 17/86*(2020.01)i; *G01S 17/931*(2020.01)i
FI:  G05D1/02 H; G01S13/74; G01S17/931; G01S17/86

According to International Patent Classification (IPC) or to both national classification and IPC

| B. | FIELDS SEARCHED |
|---|---|

Minimum documentation searched (classification system followed by classification symbols)

G05D1/02; G01S13/74; G01S17/86; G01S17/931

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 2021-163455 A (TOYOTA IND CORP) 11 October 2021 (2021-10-11)<br>entire text, all drawings | 1-8 |
| A | JP 2008-9533 A (TOYOTA IND CORP) 17 January 2008 (2008-01-17)<br>entire text, all drawings | 1-8 |
| A | JP 2019-128882 A (YANMAR CO LTD) 01 August 2019 (2019-08-01)<br>entire text, all drawings | 1-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/028080**

| Patent document cited in search report | | | Publication date (day/month/year) | Patent family member(s) | Publication date (day/month/year) |
|---|---|---|---|---|---|
| JP | 2021-163455 | A | 11 October 2021 | (Family: none) | |
| JP | 2008-9533 | A | 17 January 2008 | (Family: none) | |
| JP | 2019-128882 | A | 01 August 2019 | EP 3745232 A1 entire text, all drawings | |

Form PCT/ISA/210 (patent family annex) (January 2015)

**EP 4 600 697 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022093887 A
- JP 2020205044 A
- JP 2021119440 A
- WO 2021111613 A1
- WO 2020137315 A1
- WO 2013045298 A1
- JP 2021107994 A
- JP 2016115207 A
- JP 2021101156 A